# EUROPEAN PATENT APPLICATION

(11) **EP 4 618 620 A1**
(43) Date of publication of application: **17.09.2025**
(21) Application number: 23889081.8
(22) Date of filing: 06.11.2023
(51) Int. Cl.: H04W 28/18, H04W 76/15, H04W 84/12, H04W 88/08

(54) **METHOD AND APPARATUS FOR SCHEDULING ON BASIS OF MULTIPLE ACCESS POINT OPERATIONS IN WIRELESS LAN SYSTEM**

(30) Priority: 07.11.2022 KR 20220147183
(71) Applicant: LG Electronics Inc., Yeongdeungpo-gu Seoul 07336 (KR)
(72) Inventor: BAEK, Sunhee, Seoul 06772 (KR); JANG, Insun, Seoul 06772 (KR); CHOI, Jinsoo, Seoul 06772 (KR)
(74) Representative: Frenkel, Matthias Alexander
(86) International application number: PCT/KR2023/017672
(87) International publication number: WO 2024/101820

(57) **Abstract**

Disclosed are a method and apparatus for scheduling on the basis of multiple access point (AP) operations in a wireless LAN system. A method, performed by a first type station (STA) in a wireless LAN system according to one embodiment of the present disclosure, may comprise the following steps of: receiving, from a second type STA, information relating to one or more service periods (SPs) for the first type STA among a plurality of first type STAs; and performing, on the basis of the information relating to one or more SPs, a frame exchange with one or more third type STAs associated with the first type STA. The one or more SPs may comprise SPs that are restricted from transmitting STAs other than the first type STA and the one or more third type STAs. The information relating to one or more SPs may further comprise information about other one or more SPs that are allowed to transmit one or more other first type STAs among the plurality of first type STAs, or one or more among one or more other third type STAs associated with the one or more other first type STAs.

## Description

### [TECHNICAL FIELD]

The present disclosure relates to a scheduling method and device based on a multi-access point (AP) operation in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical problem of the present disclosure is to provide a scheduling method and device based on a multi-AP operation in a WLAN system.

An additional technical problem of the present disclosure is to provide a method and a device in which one AP participating in a multi-AP operation schedules a service period (SP) of at least one another AP in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first type station (STA) in a WLAN system according to an aspect of the present disclosure may include receiving, from a second type STA, information related to at least one service period (SP) for the first type STA among a plurality of first type STAs; and based on the information related to the at least one SP, performing a frame exchange with at least one third type STA associated with the first type STA. The at least one SP may include a SP that is restricted from transmitting a STA other than the first type STA and the at least one third type STA. Information related to the at least one SP may further include information about at least one another SP that is allowed to transmit at least one of at least one another first type STA among the plurality of first type STAs, or at least one another third type STA associated with the at least one another first type STA.

A method performed by a second type station (STA) in a WLAN system according to an additional aspect of the present disclosure may include setting information related to at least one service period (SP) based on information provided from a plurality of first type STAs; and transmitting the information related to the at least one SP to the plurality of first type STAs. The at least one AP may include a SP that is restricted from transmitting a STA other than one first type STA among the plurality of first type STAs and at least one third type STA associated with the one first type STA. Information related to the at least one SP may further include information about at least one another SP that is allowed to transmit at least one of at least one another first type STA among the plurality of first type STAs, or at least one another third type STA associated with the at least one another first type STA.

### [Technical Effects]

According to the present disclosure, a scheduling method and device based on a multi-AP operation in a WLAN system may be provided.

According to the present disclosure, a method and a device in which one AP participating in a multi-AP operation schedules a service period (SP) of at least one another AP in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing an example of an individual TWT operation to which the present disclosure may be applied.
FIG. 9 is a diagram for describing an example of a broadcast TWT operation to which the present disclosure may be applied.
FIG. 10 is a diagram for describing various transmission or reception techniques in a MAP environment to which the present disclosure may be applied.
FIG. 11 is a diagram for describing the operation of a first type STA according to the present disclosure.
FIG. 12 is a diagram for describing the operation of a second type STA according to the present disclosure.
FIG. 13 is a diagram for describing information transmission or reception between a first type STA, a second type STA, and a third type STA according to an example of the present disclosure.
FIG. 14 is a diagram for describing information transmission or reception between a first type STA, a second type STA, and a third type STA according to another example of the present disclosure.
FIG. 15 is a diagram showing examples of a position on a time domain of SPs for a first type STA according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

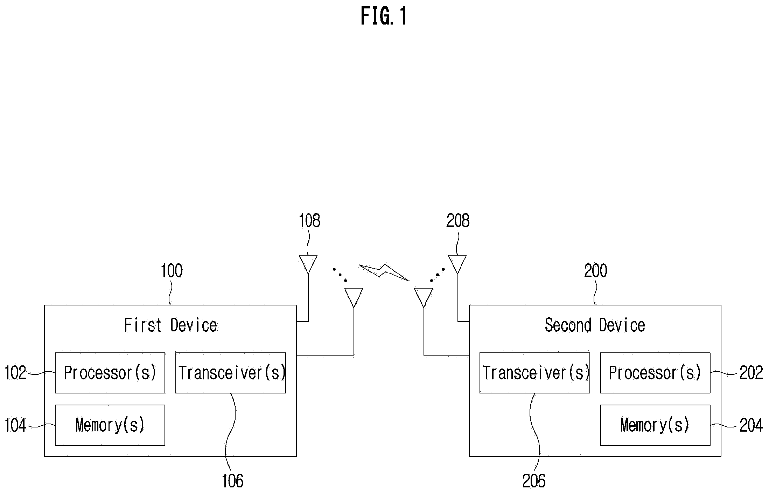

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

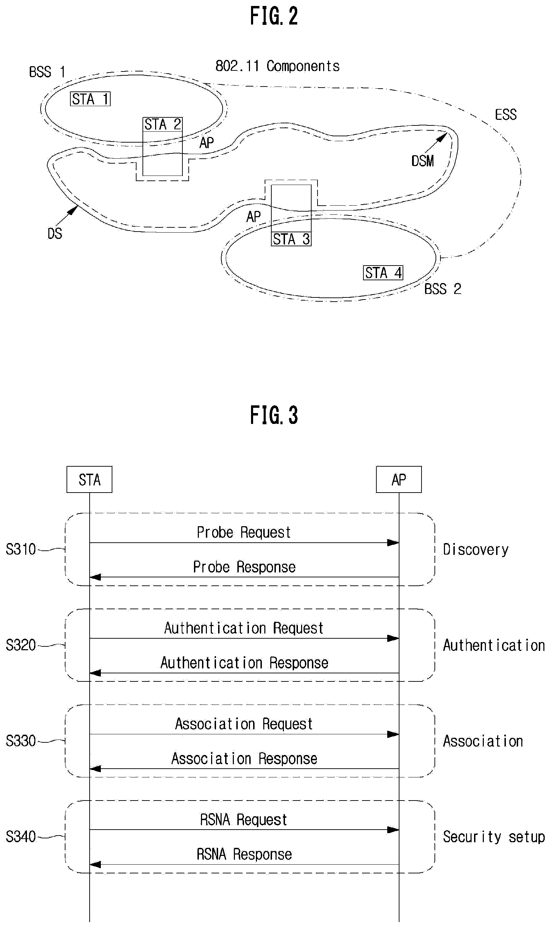

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

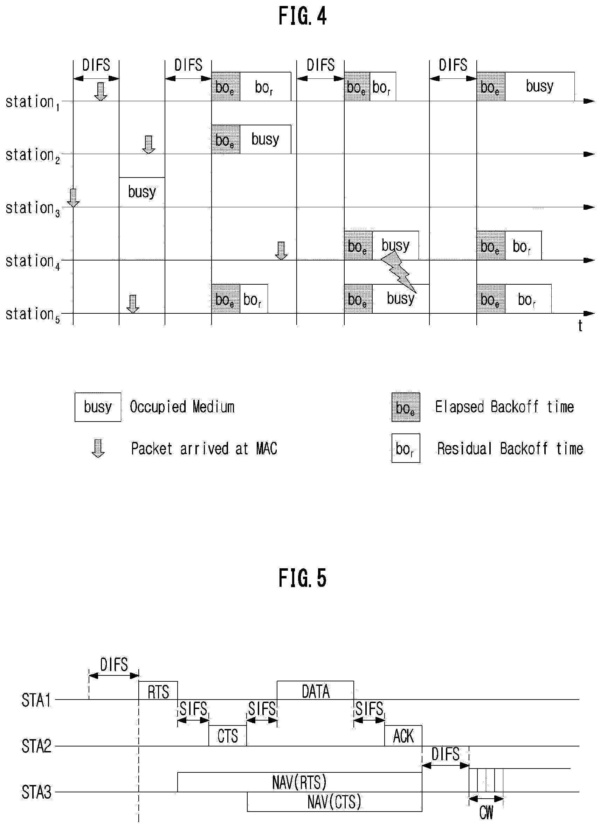

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

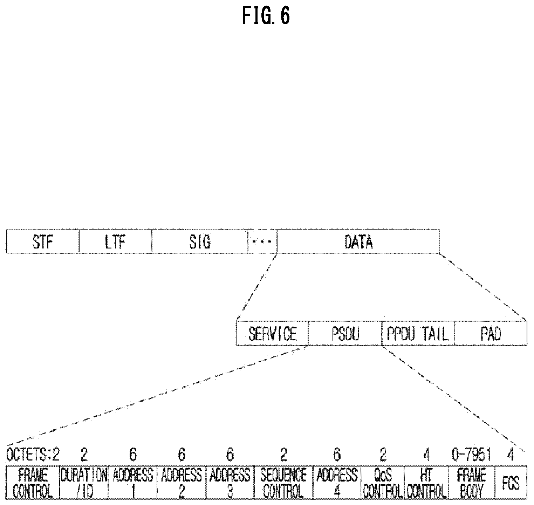

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

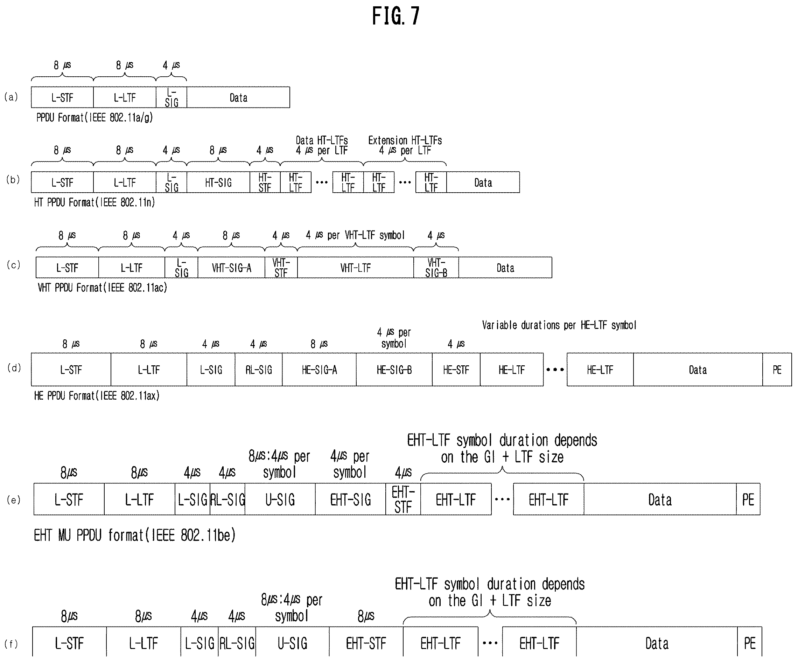

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Target Wake Time (TWT)

Hereinafter, a target wake time (TWT) is described.

A TWT is a power saving (PS) technology which may improve energy efficiency of non-AP STAs by defining a service period (SP) between an AP and non-AP STA and sharing information about a SP each other to reduce media contention. A STA which performs a request/a suggest/a demand, etc. in a TWT setup step may be referred to as a TWT requesting STA. In addition, an AP which responds to a corresponding request such as Accept/Reject, etc. may be referred to as a TWT responding STA. A setup step may include a TWT request for an AP of a STA, a type of a TWT operation performed and a process of determining/defining a frame type transmitted or received. A TWT operation may be divided into an individual TWT and a broadcast TWT.

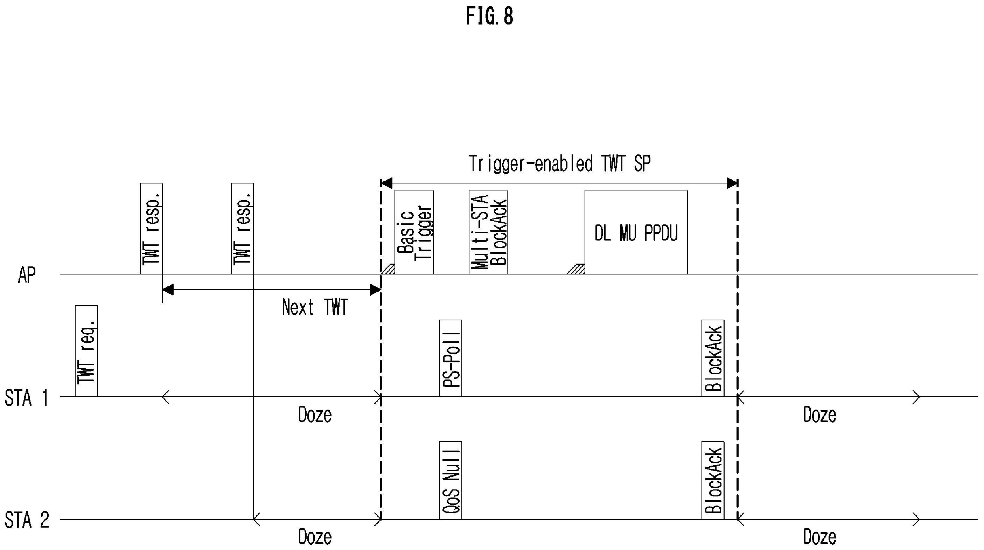

FIG. 8 is a diagram for describing an example of an individual TWT operation to which the present disclosure may be applied.

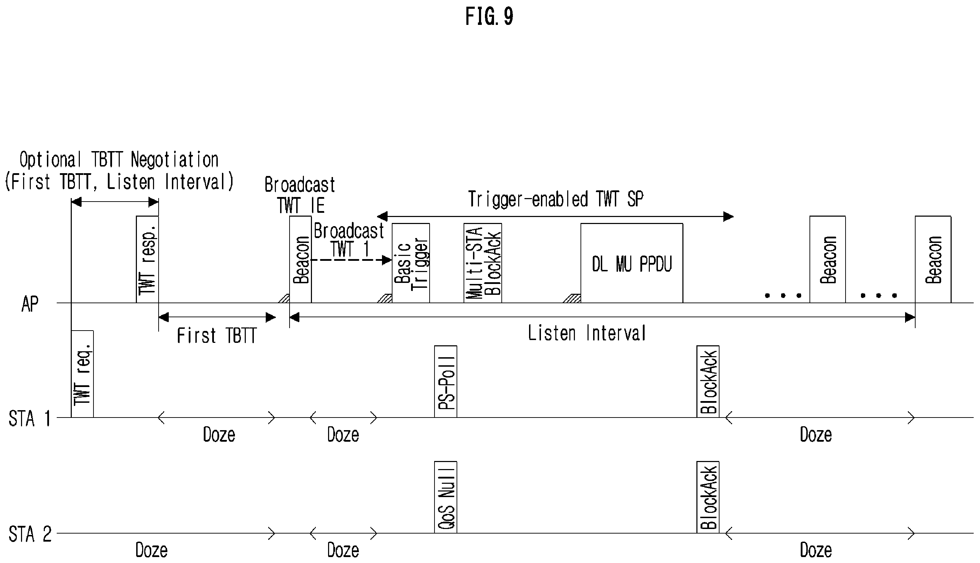

An individual TWT is a mechanism that an AP and non-AP STA perform data exchange after performing negotiation for an awake/doze status of a non-AP STA through transmission or reception of a TWT request/response frame. In an example of FIG. 9, an AP and STA1 may form a trigger-enabled TWT agreement through a TWT request frame and a TWT response frame. Here, a method used by STA1 is a solicited TWT method, which is a method that when STA1 transmits a TWT request frame to an AP, STA1 receives information for a TWT operation from an AP through a TWT response frame. On the other hand, STA2 which performs an unsolicited TWT method may receive information on a trigger-enabled TWT agreement configuration from an AP through an unsolicited TWT response. Specifically, STA2 may calculate a next TWT by adding a specific number from a current TWT value. During a trigger-enabled TWT SP, an AP may transmit a trigger frame to STAs. The trigger frame may inform STAs that an AP has buffered data. In response to it, STA1 may inform an AP of its awake status by transmitting a PS-Poll frame. In addition, STA2 may inform an AP of its awake status by transmitting a QoS Null frame. Here, a data frame transmitted by STA1 and STA2 may be a frame in a TB PPDU form. An AP which confirmed a status of STA1 and STA2 may transmit a DL MU PPDU to awake STAs. When a corresponding TWT SP expires, STA1 and STA2 may switch to a doze status.

FIG. 9 is a diagram for describing an example of a broadcast TWT operation to which the present disclosure may be applied.

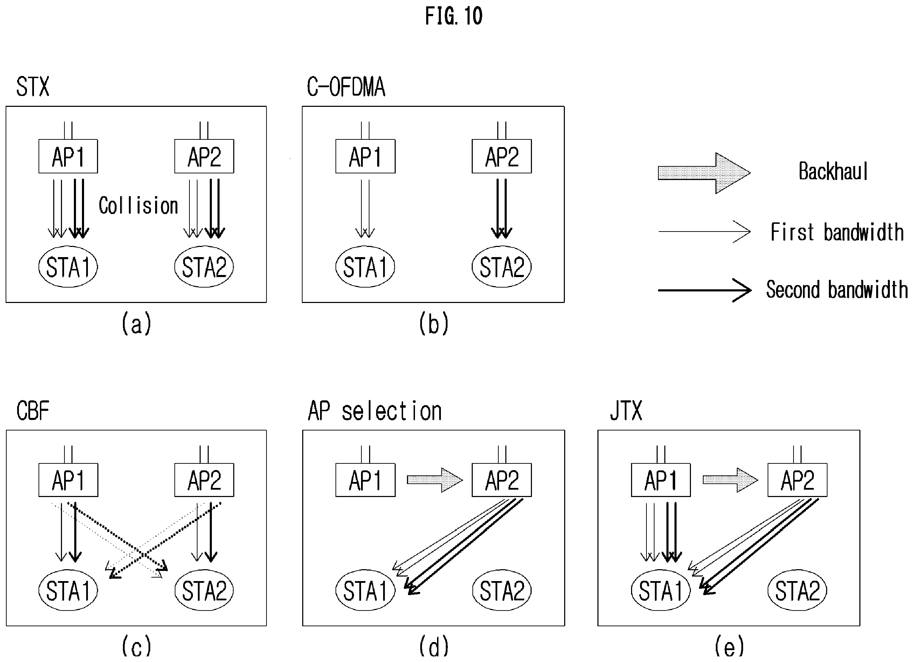

A broadcast TWT is a TWT that a non-AP STA (or a TWT scheduling STA) acquires information on a target beacon transmission time (TBTT) and a listen interval, etc. by transmitting or receiving a TWT request/response frame with an AP (or a TWT scheduled STA). Here, a negotiation operation for a TBTT may be performed. Based on it, an AP may define a frame which will include scheduling information of a TWT through a beacon frame. In FIG. 10, STA1 performs a solicited TWT operation and STA2 performs an unsolicited TWT operation. An AP may transmit a DL MU PPDU after confirming an awake status of STAs through a trigger transmitted by an AP. It may be the same as a process of an individual TWT. In a broadcast TWT, a trigger-enabled TWT SP including a beacon frame may be repeated several times at a certain interval.

Delivery of TWT information may be performed through a TWT information frame and a TWT information element.

As wired and wireless traffic has recently exploded, latency sensitive traffic has also increased significantly. Latency sensitive traffic includes real-time audio/video transmission, and with the proliferation of multimedia devices, the need to support this in a wireless environment has increased. However, compared to a wired environment, there are many things to consider in a wireless environment to support latency sensitive traffic. It is because transmission speed in a wireless environment is lower than that in a wired environment, and an interference problem from the surroundings must also be considered. In particular, in a WLAN system, multiple STAs must compete equally for medium occupancy in an Industry-Science-Medical (ISM) band, so compared to a cellular communication network based on radio resource scheduling by a central base station, it is relatively more difficult to support latency sensitive traffic. The present disclosure describes a new method for supporting latency sensitive traffic in a WLAN system.

In the present disclosure, latency may refer to latency defined in the IEEE 802.11 series standard. For example, it may refer to time until after a frame to be transmitted to a queue of a MAC layer of a transmitting STA is entered, transmission of a transmitting STA is successfully completed in a PHY layer, and a corresponding frame is deleted from a queue of a MAC layer of a transmitting STA after a transmitting STA receives ACK/block ACK, etc. from a receiving STA. In addition, in the present disclosure, a non-AP STA that supports transmission of latency sensitive data may be called a low latency STA. And, data other than latency sensitive data may be called regular data.

As an AP configures a special broadcast TWT for a low latency STA that transmits latency sensitive data, a restricted TWT (restricted-TWT, r-TWT) may support securing a data transmission possibility for a low latency STA in preference to other STAs. A STA may establish a membership for at least one r-TWT schedule for an AP. Here, a r-TWT agreement may be established by the same process as a broadcast TWT agreement, and a broadcast TWT element for this may be defined to include a r-TWT parameter set field. For example, a r-TWT parameter set may refer to a specific broadcast TWT parameter set field that is distinct from other broadcast TWT parameter set fields. In other words, a r-TWT parameter set field may correspond to a special case of a broadcast TWT parameter set field. In addition, an AP may announce a r-TWT SP.

Basically, if another STA that supports a r-TWT operation is a TXOP holder, the TXOP must be ended before the start time of a r-TWT SP advertised in an associated AP. Accordingly, a STA related to a corresponding r-TWT (i.e., a low latency STA) may perform traffic transmission or reception in preference to the other STAs within a r-TWT SP.

In the present disclosure, as described above, a low latency STA related to a specific r-TWT is referred to as a member r-TWT scheduled STA, and other STAs are referred to as a non-member STA. A non-member STA has a capability to support a r-TWT operation, but it may be not a member of any r-TWT, or may support a r-TWT operation and may be a member of another r-TWT, or may be a STA that does not have a capability to support a r-TWT operation.

A STA (e.g., a low latency STA) that supports a restricted SP (or r-TWT SP) operation of a broadcast TWT may inform an AP that latency sensitive data must be transmitted based on a r-TWT operation. If an AP supports a r-TWT operation/mode, an AP may transmit a frame including scheduling information of TWTs requested by each STA to a low latency STA and other STA(s). For example, in order to perform an operation for a r-TWT, non-AP STAs may obtain r-TWT-related information from an AP through a beacon frame, a probe response frame, a (re)association response frame, or other format frames that are not defined yet (e.g., a frame for broadcast, advertisement and announcement).

According to a restricted TWT operation, a separate TXOP (i.e., access by other STAs is restricted) may be secured within a r-TWT SP by using a NAV such as (MU) RTS/CTS or CTS-to-self, or a quiet interval, etc. Before a specific r-TWT SP starts, if there is a TXOP of another STA (i.e., a non-member STA) other than a STA having a membership for the specific r-TWT schedule, it must be stopped. And a TXOP of the another STA (i.e., a non-member STA) may be additionally performed after the specific r-TWT SP ends.

### Multiple Access Point (MAP) Operation

Hereinafter, examples of the present disclosure for a multi-access point (MAP) operation will be described.

A MAP operation may be defined as an operation between a master AP (or a sharing AP) and a slave AP (or a shared AP).

A master AP plays a role of initiating and controlling a MAP operation for transmission or reception between multiple APs. A master AP groups a slave AP and manages a link with slave APs to share information between slave APs. A master AP manages information of a BSS configured with slave APs and information of STAs associated with a corresponding BSS.

A slave AP may be associated with a master AP and share control information, management information and data traffic with each other. A slave AP performs a basic function of an AP which may establish a BSS in a wireless LAN in the same way.

A STA in a MAP operation may be associated with a slave AP or a master AP to configure a BSS.

In a MAP environment, a master AP and a slave AP may perform direct transmission or reception with each other. A master AP and a STA may not be able to perform direct transmission or reception with each other. A slave AP (e.g., a slave AP associated with a STA) may perform direct transmission or reception with a STA. One of slave APs may become a master AP.

A MAP operation is a technique in which at least one AP transmits and receives information to at least one STA. For example, a C-TDMA (coordinated-time division multiple access) technique which divides allocation between APs on a time axis, a C-OFDMA (coordinated-orthogonal frequency division multiple access) technique which divides allocation between APs on a frequency axis, a C-SR (coordinated-spatial reuse) technique which uses spatial reuse and others may be applied for a MAP operation. Alternatively, a coordinated beamforming (C-BF) or joint beamforming technique which performs simultaneous transmission or reception in cooperation may be also applied for a MAP operation.

FIG. 10 is a diagram for describing various transmission or reception techniques in a MAP environment to which the present disclosure may be applied.

When a BSS AP performs transmission to a BSS STA like an existing method, it may be referred to as single transmission (STX). In STX, there is a problem that the performance of transmission or reception for users/STAs positioned at a cell edge is reduced due to interference with an adjacent AP. For example, as in FIG. 10(a), when AP1 and AP2 perform transmission to STA1 and STA2 at the same time in the same frequency bandwidth, a collision may occur on a wireless medium.

In a MAP technique, performance may be improved through a method for reducing inter-symbol interference (ISI) through cooperation between neighboring APs or performing transmission together. For example, in a C-OFDMA method of FIG. 10(b), AP1 may perform transmission to STA1 in a first bandwidth and AP2 may perform transmission to STA2 in a second bandwidth at the same time, avoiding interference. An example in FIG. 10(c) shows cooperative beamforming or nulling technique in which AP1 nulls interference to AP2 and/or STA2 while performing transmission to STA1 and AP2 nulls interference to AP1 and/or STA1 while performing transmission to STA2. FIG. 10(d) shows an AP selection method in which an AP with a good channel condition among the adjacent APs performs transmission. As in an example of FIG. 10(e), joint transmission (JTX) or joint reception (JRX) in which multiple APs cooperate to perform transmission or reception simultaneously may be applied, and further, joint MU-MIMO may be supported.

### Multi-AP Operation based Scheduling

As described above, a method is applied in which STAs (e.g., an AP STA and a non-AP STA) in the existing WLAN systm attempt to access a wireless medium based on carrier sensing, or in which an AP STA provides scheduling information for uplink transmission to a non-AP STA through a trigger, or in which an AP STA sets a time period (e.g., a r-TWT-based SP) to restrict transmission of a STA other than specific non-AP STA(s). In contrast, in a multi-AP operation, one AP may perform the role of a master AP or a sharing AP and at least one another AP may perform the role of a slave AP or a shared AP, so it is required to efficiently schedule a time resource where a plurality of APs and non-AP STAs associated with corresponding APs perform transmission.

In examples below, in one multi-AP operation group, a STA that performs the role of a slave (or shared) AP may be referred to as a first type STA, a STA that performs the role of a master (or sharing) AP may be referred to as a second type STA, and a non-AP STA that is associated with a slave AP or a master AP may be referred to as a third type STA.

Examples of the present disclosure are described by assuming one multi-AP operation group, but the scope of the present disclosure is not limited thereto, and even when one STA belongs to a plurality of multi-AP operation groups, it may perform an operation corresponding to the type (e.g., a first, second, or third type) of a corresponding STA within each multi-AP operation group. In other wors, one STA may perform a master AP role, a slave AP role, or a non-AP STA role within a corresponding group according to the setting of a multi-AP operation group to which it belongs. For example, one STA may perform a master AP role within one group and perform a slave AP role within another group.

Various examples of the present disclosure for a new scheduling method based on or required to support a multi-AP operation are described below.

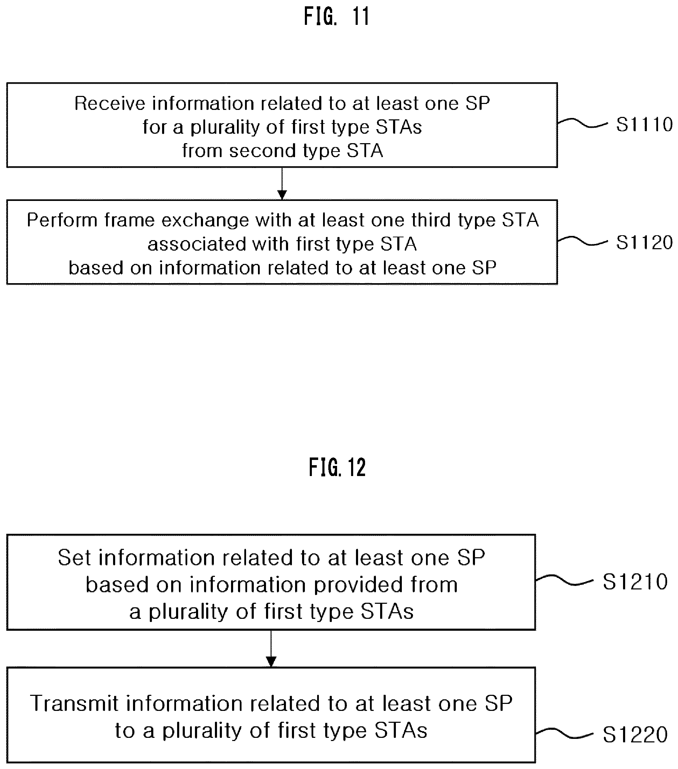

FIG. 11 is a diagram for describing the operation of a first type STA according to the present disclosure.

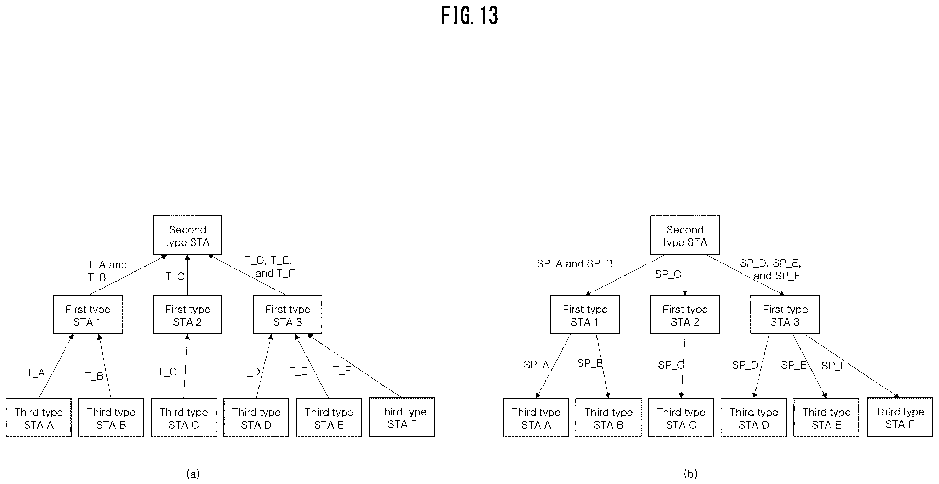

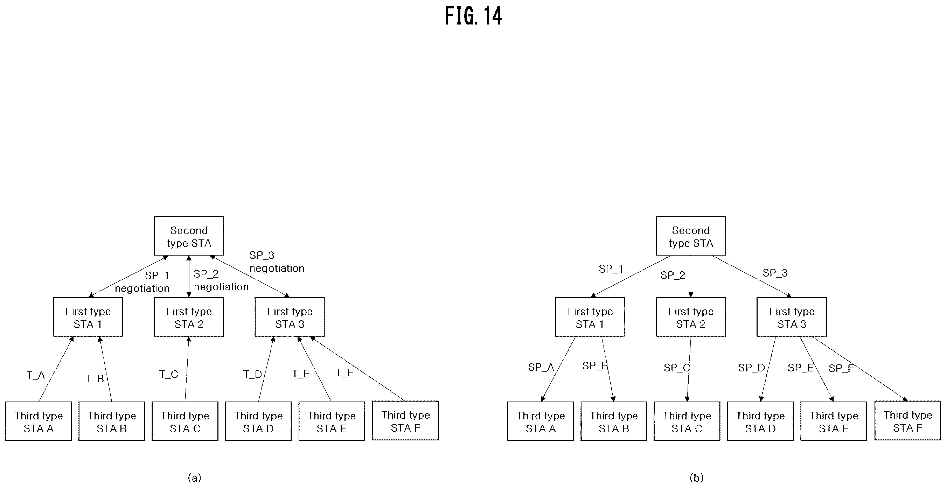

A first type STA in the example of FIG. 11 may correspond to one of the first type STA 1, 2 or 3 in the example of FIG. 13 or FIG. 14 described below, and may be referred to as a slave AP STA or a shared AP STA in a multi-AP operation.

A second type STA in the example of FIG. 11 may correspond to a second type STA in the example of FIG. 13 or FIG. 14 described below, and may be referred to as a master AP STA or a sharing AP STA in a multi-AP operation.

At least one third type STA in the example of FIG. 11 may correspond to third type STA A and B in the example of FIG. 13 or FIG. 14 described below or may correspond to third type STA C or may correspond to third type D, E and F, and may correspond to at least one non-AP STA associated with a slave AP STA or a shared AP STA in a multi-AP operation.

In this way, one multi-AP operation group may include one second type STA and a plurality of (or at least one) first type STAs. Each first type STA may be associated with at least one third type STA.

In S1110, a first type STA may receive information related to a SP for a plurality of first type STAs from a second type STA.

When a SP is provided by a second type STA for a plurality of first type STAs, it may include that a SP is scheduled, allocated, guaranteed and shared. SP-related information may include information directly indicating a SP or information used to determine a SP.

When an operation in FIG. 11 is performed by one (e.g., STA 1) of a plurality of first type STAs (e.g., STA 1, 2 and 3), information related to at least one SP may include information related to at least one SP for STA 1 and additionally may include information related to at least one SP for STA 2 or STA 3. STA 1 may identify information related to at least one SP provided to it, and STA 2 and STA 3 may also identify information related to at least one SP provided to them, respectively.

For example, at least one SP for STA 1 may include a SP that is restricted from transmitting a STA other than at least one third type STA (e.g., STA A and B) associated with a STA and STA 1.

For example, information related to at least one SP for a plurality of first type STAs may further include information about at least one another SP that is allowed to transmit at least one of an additional first type STA (e.g., STA 2, 3, ...) or an additional third type STA (e.g., STA C, D, E, F, ...).

In S1120, a first type STA may perform a frame exchange with at least one third type STA associated with it based on information related to at least one SP.

For example, STA 1 may identify information related to at least one SP about it from information related to at least one SP for a plurality of first type STAs and may perform a frame exchange with a third type STA (e.g., STA A and B) associated with it based thereon. Transmission of other STAs (e.g., first type STA 2 and 3 and third type STA C, D, E and F) from at least one corresponding SP is restricted.

For example, STA 2 may identify information related to at least one SP about it from information related to at least one SP for a plurality of first type STAs and may perform a frame exchange with a third type STA (e.g., STA C) associated with it based thereon. Transmission of other STAs (e.g., first type STA 1 and 3 and third type STA A, B, D, E and F) from at least one corresponding SP is restricted.

For example, STA 3 may identify information related to at least one SP about it from information related to at least one SP for a plurality of first type STAs and may perform a frame exchange with a third type STA (e.g., STA D, E and F) associated with it based thereon. Transmission of other STAs (e.g., first type STA 1 and 2 and third type STA A, B and C) from at least one corresponding SP is restricted.

In the example of FIG. 11, information related to at least one SP for a plurality of first type STAs generated or set by a second type STA may be based on predetermined information transmitted from at least one of a plurality of first type STAs to a second type STA. For example, predetermined information may include information provided from third type STA(s) associated with each first type STA. Information provided from third type STA(s) may include, for example, information about the buffered amount of latency sensitive traffic.

For example, a first type STA may transmit corresponding information to a second type STA without additional processing of information provided from third type STA(s). In addition, information related to at least one SP provided by a second type STA may include information indicating at least one SP for each third type STA, and a first type STA may transmit corresponding information to a third type STA without additional processing thereof.

Additionally or alternatively, a first type STA may generate or set information to be provided to a second type STA based on information provided from third type STA(s). For example, STA 1 may generate or set information to be transmitted to a second type STA based on information received from STA A and B. For example, information provided by a first type STA to a second type STA may include information about at least one of a minimum interval (i.e., a time interval between SPs when a plurality of SPs are allocated), a maximum interval, a minimum duration, a maximum duration or a start time for a SP requested by a corresponding first type STA, and additionally or alternatively, may include information about the total amount of data buffered by a corresponding first type STA and at least one third type STA associated with a corresponding first type STA.

In addition, a first type STA may determine at least one SP to be indicated to a third type STA associated with it based on information related to at least one SP provided from a second type STA. For example, STA 1 may determine a SP to be commonly or individually allocated to STAs A and B within at least one SP allocated from a second type STA. Information indicating at least one SP determined by a first type STA may be transmitted to a corresponding third type STA.

For example, information related to at least one SP for a plurality of first type STAs provided by a second type STA may include the number of a plurality of first type STAs, identification information for each of a plurality of first type STAs, information about a SP allocated to each of a plurality of first type STAs, etc. For example, information about a SP allocated to a first type STA may include information about identification information of a first type STA, an interval for an allocated SP (i.e., a time interval between SPs when a plurality of SPs are allocated), a duration, a start time, etc.

In this way, information related to at least one SP for a plurality of first type STAs may be generated or set through a negotiation process between a plurality of first type STAs and one second type STA. For example, a first type STA may provide information obtained from third type STA(s) associated with it to a second type STA by responding to a request from a second type STA, or as it is or by processing it even without a request from a second type STA. In addition, a first type STA may request information about at least one SP from a second type STA. The other party may return information accepting or rejecting information exchanged between a first type STA and a second type STA, and through this process, information related to at least one SP allocated to a plurality of first type STAs (and a plurality of third type STAs) may be determined.

SPs allocated to different first type STAs may not overlap in a time domain or may partially (or wholly) overlap. In an overlapping time domain region, one first type STA (and at least one third type STA associated with a corresponding first type STA) having a priority among the different first type STAs may perform transmission and reception (i.e., frame exchange). This priority may be determined based on a predetermined rule, and information indicating a first type STA having a priority may be signaled by a second type STA.

A method described in the example of FIG. 11 may be performed by a first device 100 in FIG. 1. For example, at least one processor 102 of a first device 100 in FIG. 1 may be configured to receive information about at least one SP for a plurality of devices from a second device 200 and perform a frame exchange with third device(s) associated with it based on corresponding information. Furthermore, at least one memory 104 of a first device 100 may store instructions for performing a method described in the example of FIG. 11 or examples described below when executed by at least one processor 102.

FIG. 12 is a diagram for describing the operation of a second type STA according to the present disclosure.

A first type STA, a second type STA and a third type STA in the example of FIG. 12 are the same as those described by referring to FIG. 13 and FIG. 14 in the description of FIG. 11.

In S1210, a second type STA may set information related to at least one SP for a plurality of first type STAs based on information provided from a plurality of corresponding first type STAs.

Since a description for the example of FIG. 11 may be applied to information provided from a plurality of first type STAs (or at least one first type STA of them) to s second type STA and information related to at least one SP for a plurality of first type STAs, an overlapping description is omitted.

In S1220, a second type STA may transmit information related to at least one SP to a plurality of first type STAs.

Accordingly, each first type STA may determine at least one SP that is limitedly allocated to it (i.e., that is not allowed to transmit and receive other first type STAs and third type STAs) based on information transmitted from a second type STA, and may perform frame transmission and reception with at least one third type STA associated with it based on this.

A method described in the example of FIG. 12 may be performed by a second device 200 in FIG. 1. For example, at least one processor 202 of a second device 200 in FIG. 1 may be configured to set information related to at least one SP based on information provided from a plurality of first devices 100 and transmit corresponding information to a plurality of first devices 100. Furthermore, at least one memory 204 of a second device 200 may store instructions for performing a method described in the example of FIG. 12 or examples described below when executed by at least one processor 202.

Examples of FIGS. 11 and 12 may correspond to some of the various examples of the present disclosure. Hereinafter, various examples of the present disclosure including the example of FIGS. 11 and 12 are described in more detail.

In embodiments described below, a SP is described as a representative example to which the present disclosure is applied as a time domain unit provided to a plurality of first type STAs (or a plurality of third type STAs), but a term of SP is not limited to what is defined in a r-TWT, and embodiments described below may be equally applied to time units under other names that allow transmission and reception of specific STA(s) while restricting transmission and reception of other STAs.

### Embodiment 1

This embodiment relates to a method in which a SP for all STAs (i.e., a first type STA corresponding to a shared AP STA or a slave AP, and a third type STA corresponding to a non-AP STA associated with a first type STA) is determined by a second type STA (e.g., a sharing AP or a master AP). Information related to a corresponding SP may be transmitted from a second type STA to a first type STA, and to a third type STA through a first type STA. In other words, frame exchange within an allocated SP between a first type STA and a third type STA may be performed according to the scheduling of a second type STA.

FIG. 13 is a diagram for describing information transmission or reception between a first type STA, a second type STA, and a third type STA according to an example of the present disclosure.

In the example of FIG. 13(a), a third type STA may be associated with a first type STA, not a second type STA. Here, a first type STA may obtain information of third type STA(s) associated with it. A first type STA may transmit all or part of the data required or obtained in the process of establishing an association with each third type STA (e.g., a part of the data required by a second type STA) to a second type STA.

For example, first type STA 1 may obtain information T_A about buffered data of third type STA A, and information T_B about buffered data of third type STA B. First type STA 1 may transmit T_A and T_B to a second type STA. Similarly, the remaining first type STA 2 or 3 may also transmit information T_C about buffered data of third type STA C associated with it, or information T_D, T_E, T_F about buffered data of STA D, E and F to a second type STA.

In the example of FIG. 13(b), a second type STA may provide scheduling information (e.g., information related to a SP) to each first type STA based on information of third type STA(s) received from a first type STA. For example, a second type STA may receive information about third type STAs that requested a r-TWT SP among the third type STAs from a first type STA. A second type STA may allocate r-TWT SP(s) of an appropriate length to each third type STA based on information of the latency sensitive traffic scheduled to be transmitted and received (or buffered) by each third type STA received from a first type STA. A first type STA may receive information related to a r-TWT SP allocated to third type STAs associated with it from a second type STA, and based on this, may perform transmission and reception of latency sensitive traffic with third type STAs.

For example, a second type STA may schedule a SP for STA A and a SP for STA B and provide information SP_A and SP_B indicating this to first type STA 1. First type STA 1 may transmit SP_A and SP_B to STA A and B, respectively. Similarly, a second type STA may provide information indicating a SP for third type STA C, or STA D, E, and F associated with a corresponding first type STA for first type STA 2 or 3, and STA 2 or STA 3 may transmit SP_C, or SP_D, SP_E, and SP_F to STA C, or STA D, E, and F.

For example, SP_A, SP_B, SP_C, SP_D, SP_E, and SP_F provided by a second type STA may be included in one frame or element or may be included in a plurality of frames or elements. Accordingly, one first type STA may receive scheduling information of a third type STA associated with at least one another first type STA in addition to scheduling information of a third type STA associated with it.

In this way, a second type STA may schedule a time resource for data transmission and reception of all third type STAs and first type STAs. Accordingly, a first type STA may perform a simple operation for transmitting scheduling information, and a second type STA may have a capability to support a complex operation for performing scheduling by considering information about all STAs in a multi-AP operation group. In addition, in this embodiment, in a situation where the BSS of a first type STA and the BSS of a second type STA are different and a third type STA is associated with a first type STA, not a second type STA, a second type STA may perform scheduling for a third type STA based on information transmitted from a first type STA (e.g., information about a third type STA) without establishing an association between a second type STA and a third type STA.

### Embodiment 2

This embodiment relates to a method in which a second type STA provides a SP to a first type STA. A first type STA may autonomously schedule transmission and reception of third type STA(s) associated with it within a SP provided from a second type STA. In other words, a SP provided by a second type STA may correspond to a superset on the time domain region of SPs where frame exchange between a first type STA and third type STAs is allowed, and a first type STA may determine a SP allocated to third type STAs associated with it (i.e., a time domain region corresponding to all or part of the superset) without scheduling a second type STA.

In Embodiment 1, a second type STA receives information of all third type STAs associated with a first type STA to perform scheduling (i.e., allocate a SP) for each third type STA, whereas in Embodiment 2, a second type allocates the entire SP necessary for data transmission and reception (with a third type STA) to a first type STA without requiring all information of third type STAs associated with a first type STA. Each first type STA may perform scheduling for each third type STA associated with it by subdividing a SP allocated from a second type STA.

### Embodiment 2-1

FIG. 14 is a diagram for describing information transmission or reception between a first type STA, a second type STA, and a third type STA according to another example of the present disclosure.

In the example of FIG. 14(a), a second type STA may perform a negotiation related to SP allocation with a first type STA. For example, a second type STA may request information necessary for allocating a SP to a first type STA. In response thereto, a first type STA may calculate parameters/values related to a SP that needs to be allocated to it (i.e., a first type STA) based on information received from third type STAs associated with it, and transmit a calculated result to a second type STA. Alternatively, a first type STA may also provide a calculated result to a second type STA without a request from a second type STA.

For example, information requested by a second type STA or information provided by a first type STA to a second type STA may include at least one information of the following examples:
- Minimum SP Interval: The minimum time interval between SPs requested by a first type STA
- Maximum SP Interval: The maximum time interval between SPs requested by a first type STA
- Minimum SP Duration: The minimum time length of a SP requested by a first type STA
- Maximum SP Duration: The maximum time length of a SP requested by a first type STA
- SP Start Time: The start time of a SP requested by a first type STA (e.g., a time offset compared to a predetermined reference time)
- Amount of Buffered Data: The total amount of data (e.g., latency sensitive data to be transmitted and received) buffered by third type STA(s) associated with a first type STA or buffered by a first type STA

For example, first type STA 1 may obtain information T_A about buffered data of third type STA A, and information T_B about buffered data of third type STA B. Instead of transmitting T_A and T_B to a second type STA, STA 1 may calculate the value of a parameter such as a minimum interval, a maximum interval, a minimum duration, a maximum duration, a start time, the amount of buffered data (e.g., the sum of buffered data of T_A, T_B and STA 1), etc. for SP_1 based on T_A and T_B and provide it to a second type STA. Similarly, the remaining first type STA 2 or 3 may also calculate a parameter for requested SP_2 or SP_3 based on information T_C about buffered data of third type STA C associated with it or information T_D, T_E and T_F about buffered data of STA D, E and F, and provide it to a second type STA.

In the example of FIG. 14(b), a second type STA may schedule a SP for a first type STA based on a parameter for a SP requested from first type STAs. A second type STA may provide a first type STA with information related to a SP allocated to a first type STA.

For example, SP_1, SP_2 and SP_3 provided by a second type STA may be included in one frame or element or may be included in a plurality of frames or elements. Accordingly, one first type STA may receive scheduling information allocated to at least one another first type STA in addition to scheduling information allocated to it.

For example, SP allocation information provided by a second type STA to a first type STA may include at least one information of the following examples:
- Number of First Type STAs: The number of first type STAs that are allocated a SP from a second type STA
- Identification Information of First Type STA: AP ID for distinguishing each first type STA
- First Type STA-specific Information (or Information per First Type STA): Information about a SP allocated to each first type STA

For example, first type STA-specific information may be provided by using a TWT element format. For example, information about a SP allocated to a corresponding first type STA may be provided through a control field and a (individual or broadcast) TWT parameter set field included in a TWT element format.

Additionally or alternatively, a new SP information element that includes only information necessary to identify a SP for a first type STA of the present disclosure may be defined. This SP information element may include at least one information of the following examples:
- Identification Information of First Type STA: AP ID for distinguishing each first type STA
- SP Interval: Time interval between SPs allocated to a first type STA
- SP Duration: Time length of a SP allocated to a first type STA
- SP Start Time: Start time of a SP allocated to a first type STA (e.g., a time offset compared to a predetermined reference time)
- Amount of Buffered Data: The total amount of data (e.g., latency sensitive data to be transmitted and received) buffered by third type STA(s) associated with a first type STA or buffered by a first type STA

As in examples described above, a second type STA may receive a SP allocation request from a first type STA through a negotiation process and allocate a SP to a corresponding first type STA based on requested information. Additionally or alternatively, without receiving a SP allocation request from a first type STA, a second type STA may allocate a SP to a corresponding first type STA based on information about a first type STA that it obtained in a previous process. For a case where there is a SP allocation request or no request from a first type STA, a first type STA may perform a negotiation on a desired interval/length/start time, etc. subsequently or additionally through a response for accepting or rejecting the interval/length/start time, etc. of a SP allocated by a second type STA.

### Embodiment 2-2

In this embodiment, the characteristics of SPs allocated by a second type STA to a plurality of first type STAs on a time domain are described according to the examples of Embodiment 2-1.

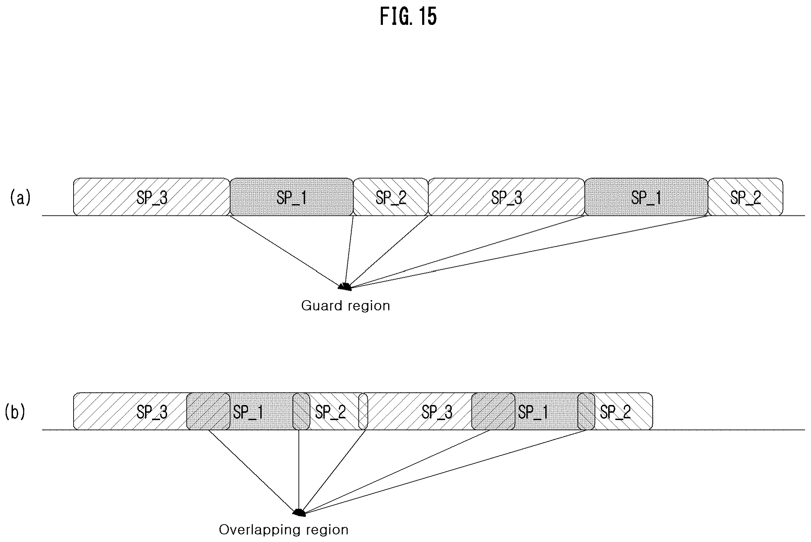

FIG. 15 is a diagram showing examples of a position on a time domain of SPs for a first type STA according to the present disclosure.

In the example of FIG. 15(a), SP_1, SP_2 and SP_3 that may transmit and receive data with third type STAs associated with each of first type STA 1, 2 and 3 may be allocated, respectively. Based on this, first type STAs may schedule third type STAs associated with each of them to transmit and receive data. For example, the length of SP_1, SP_2 and SP_3 may be the same or different. Since all environments of each first type STA are different, each first type STA may adjust the length of a SP to be allocated through a negotiation with a second type STA.

In the example of FIG. 15, frame exchange with third type STA(s) may be performed within a respective SP regularly or periodically in the order of first type STA 1 allocated the longest SP, first type STA 2 allocated the next longest SP and first type STA 3 allocated the shortest SP (i.e., in descending order of SP lengths). For example, SP_3 may be started after SP_1 and SP_2 regularly or periodically. For example, SPs for first type STAs may be scheduled in different order (e.g., in ascending order of SP lengths), and SPs for different first type STAs of the same length may also be positioned on a time domain according to a different criterion (e.g., in ascending or descending order of AP IDs).

Within the SP of each first type STA allocated by a second type STA, data transmission and reception with third type STAs associated with a corresponding first type STA may have a priority. In other words, during SP_1, only data transmission and reception between STA 1 and STA A/B may be allowed, and during SP_2, only data transmission and reception between STA 2 and STA C may be allowed, and during SP_3, only data transmission and reception between STA 3 and STA D/E/F may be allowed. To this end, a second type STA may restrict the data transmission and reception attempt of first type STA(s) other than a corresponding first type STA within a SP corresponding to each first type STA. In addition, before the SP of another first type STA starts, a previous first type STA may terminate data transmission and reception. For example, when STA 1 needs to transmit and receive data after SP_1 (i.e., when it fails to complete data transmission and reception required within SP_1), the data transmission and reception of first type STA1 may be terminated for SP_2 of STA 2 (i.e., before SP_2 starts). In this case, STA 1 may resume the remaining data transmission and reception in the next SP_1. To this end, a second type STA may set a guard region (or a guard time) between SPs of each first type STA. A guard region may be set in all or part of the SPs or a guard region may not be set.

In the example of FIG. 15(b), when a C-SR or joint beamforming (or joint transmission) method is supported in a multi-AP operation, all or part of the SPs allocated to different first type STAs may overlap on a time domain. In an overlapping region, data transmission and reception of a plurality of first type STAs with a STA associated with them may be performed simultaneously or a data transmission and reception authority or priority may be granted only to one of a plurality of first type STAs. For example, a second type STA may grant a data transmission priority to only one first type STA based on information such as buffered data information of first type STAs corresponding to overlapping SPs, the priority of data to be transmitted, etc. A second type STA may signal information indicating one first type STA with a priority to first type STAs, or which first type STA has the priority of data transmission and reception in an overlapping region may be determined without separate signaling based on a predefined rule. For example, a second type STA may compare information such as the priority of the buffered data amount/the amount to be transmitted of STA 1 and STA 2 for a region where SP_1 and SP_2 overlap to set only one first type STA (e.g., STA 1 or STA 2) to transmit and receive data with a third type STA associated with it in an overlapping region.

In the existing WLAN system, a method is applied in which an AP and a STA attempt to access a wireless medium based on carrier sensing or an AP provides a STA with scheduling information for uplink transmission from a STA to an AP through a trigger or an AP sets a time period (e.g., a r-TWT-based SP) for restricting transmission of STAs other than specific STA(s). In contrast, a multi-AP operation-based scheduling method according to examples of the present disclosure may efficiently support scheduling (e.g., SP allocation) for at least one first type STA (e.g., a shared AP or a slave AP), a second type STA (e.g., a sharing AP or a master AP) and/or at least one third type STA (e.g., a non-AP STA). To this end, as in examples described above, a new effect may be achieved in which efficient multi-AP operation-based scheduling as described above is performed based on information exchanged through frame exchange (e.g., a negotiation) on a wireless medium between at least one first type STA and a second type STA.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first type station (STA) in a wireless local area network (WLAN) system, the method comprising:
receiving, from a second type STA, information related to at least one service period (SP) for the first type STA among a plurality of first type STAs; and
based on the information related to the at least one SP, performing a frame exchange with at least one third type STA associated with the first type STA,
wherein the at least one SP includes a SP that is restricted from transmitting a STA other than the first type STA and the at least one third type STA,
wherein the information related to the at least one SP further includes information about at least one another SP that is allowed to transmit at least one of at least one another first type STA among the plurality of first type STAs, or at least one another third type STA associated with the at least one another first type STA.

2. The method of Claim 1, wherein:
the at least one SP is set by the second type STA based on information provided from the first type STA to the second type STA, and information provided from the at least one another first type STA to the second type STA,
information provided to the second type STA includes information provided by the at least one third type STA to the first type STA, and information provided from the at least one another third type STA to the at least one another first type STA.

3. The method of Claim 2, wherein:
the information related to the at least one SP includes information indicating the at least one SP set by the second type STA,
the information indicating the at least one SP set by the second type STA is provided from the first type STA to the at least one third type STA.

4. The method of Claim 1, wherein:
the at least one SP is determined by the first type STA based on the information related to the at least one SP,
information indicating the at least one SP determined by the first type STA is provided from the first type STA to the at least one third type STA.

5. The method of Claim 4, wherein the information related to the at least one SP includes at least one of:
a number of the plurality of first type STAs,
identification information about each of the plurality of first type STAs, or
information about a SP allocated to the each of the plurality of first type STAs.

6. The method of Claim 5, wherein:
the information about the SP allocated to the each of the plurality of first type STAs includes at least one of:
identification information of a corresponding first type STA; or
information about at least one of an interval, a duration, or a start time for the allocated SP.

7. The method of Claim 4, wherein:
the information related to the at least one SP is set by the second type STA based on information provided from at least one of the plurality of first type STAs to the second type STA.

8. The method of Claim 7, wherein:
the information provided from the at least one of the plurality of first type STAs to the second type STA is based on information received by a corresponding first type STA from at least one third type STA associated with the corresponding first type STA.

9. The method of Claim 7, wherein the information provided from the at least one of the plurality of first type STAs to the second type STA includes at least one of:
information about at least one of a minimum interval, a maximum interval, a minimum duration, a maximum duration, or a start time for a SP requested by a corresponding first type STA; or
information about an entire amount of buffered data in the corresponding first type STA, and at least one third type STA associated with the corresponding first type STA.

10. The method of Claim 7, wherein:
the information provided from the at least one of the plurality of first type STAs to the second type STA is provided to the second type STA in response to a request from the second type STA or without a request from the second type AP.

11. The method of Claim 4, wherein:
the information related to the at least one SP is provided to the plurality of first type STAs based on a request from at least one of the plurality of first type STAs.

12. The method of Claim 4, wherein:
for the information related to the at least one SP, information showing an acceptance or a rejection from each of the plurality of first type STAs is transmitted to the second type STA.

13. The method of Claim 1, wherein:
the at least one SP corresponding to the first type STA, and at least one another SP corresponding to the at least one another first type STA do not overlap in a time domain.

14. The method of Claim 1, wherein:
the at least one SP corresponding to the first type STA, and at least one another SP corresponding to the at least one another first type STA include a region overlapping in a time domain.

15. The method of Claim 14, wherein:
one first type STA having a priority for a transmission and a reception among the first type STA and the at least one another first type STA in the overlapping region is determined based on a predetermined rule, or
information indicating the one first type STA having the priority for the transmission and the reception is signaled by the second type STA.

16. The method of Claim 1, wherein:
the first type and the second type correspond to an access point (AP),
the third type corresponds to a non-AP STA.

17. The method of Claim 1, wherein:
the first type corresponds to a shared AP,
the second type corresponds to a sharing AP,
the third type corresponds to a non-AP STA associated with the shared AP.

18. A first type station (STA) device in a wireless local area network (WLAN) system, the derive comprising:
at least one transceiver; and
at least one processor connected to the at least one transceiver,
wherein the at least one processor is configured to:
receive, through the at least one transceiver, from a second type STA, information related to at least one service period (SP) for the first type STA among a plurality of first type STAs; and
based on the information related to the at least one SP, perform, through the at least one transceiver, a frame exchange with at least one third type STA associated with the first type STA,
wherein the at least one SP includes a SP that is restricted from transmitting a STA other than the first type STA and the at least one third type STA,
wherein the information related to the at least one SP further includes information about at least one another SP that is allowed to transmit at least one of at least one another first type STA among the plurality of first type STAs, or at least one another third type STA associated with the at least one another first type STA.

19. A method performed by a second type station (STA) in a wireless local area network (WLAN) system, the method comprising:
setting information related to at least one service period (SP) based on information provided from a plurality of first type STAs; and
transmitting the information related to the at least one SP to the plurality of first type STAs,
wherein the at least one AP includes a SP that is restricted from transmitting a STA other than one first type STA among the plurality of first type STAs and at least one third type STA associated with the one first type STA,
wherein the information related to the at least one SP further includes information about at least one another SP that is allowed to transmit at least one of at least one another first type STA among the plurality of first type STAs, or at least one another third type STA associated with the at least one another first type STA.

20. A second type station (STA) device in a wireless local area network (WLAN) system, the device comprising:
at least one transceiver; and
at least one processor connected to the at least one transceiver,
wherein the at least one processor is configured to:
set information related to at least one service period (SP) based on information provided from a plurality of first type STAs; and
transmit, through the at least one transceiver, the information related to the at least one SP to the plurality of first type STAs,
wherein the at least one AP includes a SP that is restricted from transmitting a STA other than one first type STA among the plurality of first type STAs and at least one third type STA associated with the one first type STA,
wherein the information related to the at least one SP further includes information about at least one another SP that is allowed to transmit at least one of at least one another first type STA among the plurality of first type STAs, or at least one another third type STA associated with the at least one another first type STA.

21. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to Claim 1.

22. At least one non-transitory computer-readable medium storing at least one instruction,
wherein:
the at least one instruction controls a device to perform a method according to Claim 1 in a wireless local area network (WLAN) system by being executed by at least one processor.
